# EUROPEAN PATENT SPECIFICATION

(11) **EP 2 269 754 B1**
(45) Date of publication and mention of the grant of the patent: **07.09.2016**
(21) Application number: 10168288.8
(22) Date of filing: 02.07.2010
(51) Int. Cl.: B23D 21/10

(54) **Cutting tool for threaded pipes**
Schneidewerkzeug für Gewinderohre
Outil de coupe pour tuyaux filetés

(30) Priority: 03.07.2009 SE 0950522
(43) Date of publication of application: 05.01.2011
(73) Proprietor: Villeroy & Boch Gustavsberg AB, 447 81 Vårgårda (SE)
(72) Inventor: Rydetorp, Björn, 447 95, Vårgårda (SE); Nothall, Lars, 447 33, Vårgårda (SE)
(74) Representative: Valea AB

(56) References cited:
- JP-U- 50 038 884
- US-A- 2 218 147

## Description

### TECHNICAL FIELD

The present invention relates to a cutting tool for cutting threaded pipe parts specially within the HVS business. The cutting tool has a cavity for receiving for example a pipe arranged in the pipe part to be cut.

### BACKGROUND OF THE INVENTION

A common way to install water pipes in buildings is to arrange them inside the walls, in order to thereafter bring them out from the wall into the room wherein the water is needed. Usually so called pipe-in-pipe technique is used for installing water pipes. Ripe-in-pipe technique means that a water pipe is arranged within a surrounding protective pipe. The protective pipe protects the water pipe from external influence at the same time as it, in the event of leakage of the water pipe, prevents water from leaking out inside the wall and cause moisture damages.

At installing and transition to visible piping of water pipes to for example bathrooms, laundry facilities, and other wet areas, special requirements are often called for, not only with respect to leakage safety but also with respect to simplicity of installation. Generally, there may be two different types of arrangements to facilitate Installation and to improve leakage safety within the pipe-in-pipe technique. Both of these arrangements are placed inside the walls in connection to the room to which the water pipe is intended to be brought out to, the arrangements often comprise pipe parts extending through the wall out into for example a bathroom. The pipe part usually needs to be cut into a suitable length before for example a water heater is mounted and installed.

A type of arrangement used for this purpose is generally referred to as a wall bend fixture. Wall bend fixtures are characterized by having no water pipe coupling inside the wall. An example of such a wall bend fixture is described in the patent publication of WO 01/48326 A1.

In cases where a number of water pipes are to be installed to a wet area, such as a bathroom, it may be required that a number of wall bend fixtures are placed beside each other. Examples of suitable wall bend fixtures placed in this way are disclosed In the European Patent Application EP 2014838. The wall bend fixtures disclosed in the application exhibit pipe parts, which after mounting may need to be cut or trimmed to an appropriate length. When an installer or a fitter after having installed the wall bend fixture shall cut into appropriate length of the pass-through part, it may be laborious and difficult. Often the mounting has taken place in a limited and narrow space, moreover, usually a water pipe or similar is sticking out of the pipe part to be cut or trimmed. A careless installer may accidentally happen to damage a water pipe, which may result in unwanted water leakage.

### SUMMARY OF THE INVENTION

The present invention is intended to solve or reduce at least some of the above problems, alternatively to provide an alternative to existing solutions. The present invention relates to a cutting tool for cutting a wall bend fixture comprising a threaded pipe part exhibiting a thread. The cutting tool exhibits a substantially cylindrical shape defined by at least one wall, a longitudinal centre line and a first and a second end, and at least one cutting knife. The cutting knife also exhibits attachment means for attachment to the threaded pipe part arranged in connection to the second end. The cutting knife is further arranged to cut the pipe part at rotation of said cutting tool, and thereby cutting knife, around the longitudinal centre line. The attachment means for attachment to the threaded pipe part is a thread and is arranged to interact with the thread of the pipe part, whereby, at rotation of the cutting tool in a given direction, the cutting tool moves in a direction towards the pipe part, or alternatively towards a reference point on the pipe part, at the same time as the pipe part Is cut. The cutting tool also exhibits a cavity for receiving a pipe arranged in the threaded pipe part. An example is given in JP50-38884U, which discloses the preamble of claim 1.

The present invention solves the problems of cutting pipe parts into appropriate lengths in tight spaces without damaging enclosed pipes or other sensitive material in the pipe part being cut. The problem is solved by a tool with the features of claim 1. Claims 11 and 12 concern a kit ccomprising the tool and the use of the tool

In accordance with an embodiment of the present invention the thread is arranged in direct connection to the second end of the cutting tool, which facilitates that a greater length of the pipe part may be cut. The cutting tool exhibits a transversal centre line, whereby the cutting knife, or the cutting knives, is/are arranged between the transversal centre line and the thread. This simplifies the manufacture of the cutting tool. The cutting knife, or the cutting knives, may also be arranged in direct connection to the thread. At one end of the cutting tool one or more through-going openings may be arranged. The through-going openings provide an opportunity for the cut-away material to leave the cavity and thus get out of the cutting tool.

The cutting tool may be connected to for example a screw driver or a drilling machine to transfer a rotary motion to the cutting tool and thus be able to cut a pipe part in a simple and convenient way. Therefore, there is at the first end of the cutting tool arranged means for interaction with an electric tool for transferring a rotary motion therebetween. Such means may for example be at least one or a plurality of indentations in the wall of the cutting tool. By making the wall indentations in the wall, the cavity is not blocked by the means of interaction, which makes that the cavity is kept free, and that for example a water pipe in the pipe part may get free space in the cavity of the cutting tool.

The cavity for receiving for example a water pipe, as mentioned above, arranged in the pipe part to be cut, may extend at least half the length of the cutting tool or longer into the cutting tool. It is advantageous if the cavity consists of a through-going hole which extends through the entire cutting tool. Preferably along the longitudinal centre line of the cutting tool.

The through-going hole, alternatively the cavity, may exhibit at least one portion having a second radius and the thread exhibits a first radius, whereby the second radius of the portion is smaller than the first radius of the thread. The radius is measured from the longitudinal centre line. For the thread, the distance is measured on top of the individual threads, i.e. the shortest distance of the thread. The transition between the second radius of the portion and the first radius of the thread forms a flange. The flange extends around the inner surface of the cutting tool, i.e,. the surface defining the cavity. At least one cutting knife may advantageously be arranged in connection to the flange. The cutting knife may then be arranged to abut against a part of the flange, which provides an increased structural integrity to the cutting knife. The above-mentioned through-going openings may advantageously be arranged in connection to the flange. The cutting knife can also be arranged so that it abuts on one side of the through-going opening at a position coinciding with the position of the flange, which provides additional stability to the cutting knife. If the cutting tool exhibits a plurality of openings, a plurality of cutting knives may be arranged in the same manner as described above. It is also possible that the cutting tool exhibits different numbers of cutting knives and through-going openings. For example, the cutting tool may exhibit one cutting knife and several through-going openings. This provides a less expensive design.

The present invention provides a safe cutting tool, which reduces the risk of personal injuries and which can cut pipe parts in tight spaces without risking damaging to pipes being located in the pipe part being cut.

### DEFINITIONS

The term HVS business here refers to the heating, ventilation and sanitation business. The term refers to the business within the building industry; and also the technical systems in for example buildings being planned, designed and constructed by the business, including the products then being used. The term "sanitation" refers to the business and the technical systems, including the products then being used in bathrooms, toilets, laundry facilities, nurses' rooms and operating rooms and the like.

### BRIEF DESCRIPTION OF THE DRAWINGS

The present invention will be described closer with reference to the enclosed drawings whereby;
Figure 1 illustrates a wall bend fixture being used in the sanitation business, with a pipe part passing through a wall and being appropriate to cut with a cutting tool according to the present invention;
Figure 2 illustrates a perspective view of a cutting tool according to the present invention and a screw portion for interaction with for example a screw driver;
Figure 3 further illustrates a perspective view of the cutting tool and the screw portion of Figure 2;
Figure 4a illustrates the cutting tool of Figure 2 with a view towards the second end of the cutting tool;
Figure 4b illustrates a cross section along the line A-A, shown in Figure 4a, of the screw portion of Figure 2; and
Figure 4c illustrates a cross section along the line A-A, shown in Figure 4a, of the cutting tool of Figure 2.

### DETAILED DESCRIPTION OF PREFERRED EMBODIMENTS

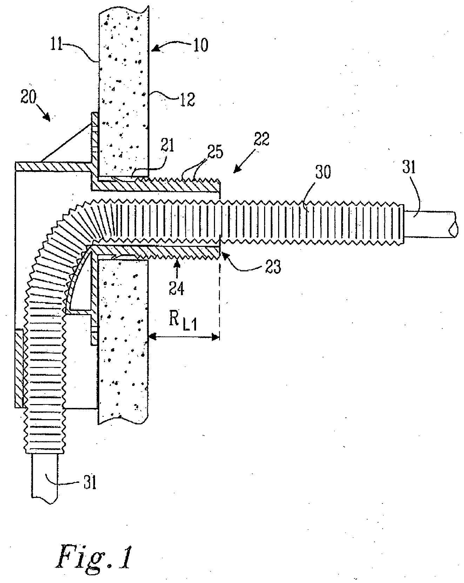

Figure 1 illustrates a schematic cross-section of a wall 10 at which a wall bend fixture 20 have been placed. Wall bend fixtures 20 are used for pipe-in-pipe applications in the HVS business. The wall exhibits a first and a second surface 11, 12. whereby the first surface faces the inside of the wall, where most often insulation is present, while the second wall surface faces a room, most often some form of a wet area, such as a bathroom. A pass-through part 22 with the shape of a pipe, i.e. a pipe part, 23 extends through a hole 21 in the wall 10. Through the wall bend fixture 20 water pipes may be led into the room. Commonly, pipe-in-pipe technique is used where an outer protective pipe 30 is used to protect an Inner water pipe 31 through which water can flow. On the outside 24 of the pipe 23 threads 25 are arranged for attachment of a fastening means (not illustrated) which in turn can be connected to a water pipe fitting such as a shower mixer.

When one (or more) fitter(s) have installed the wall bend fixture 20, tiled the second surface 12 of the wall 10, the pipe part 23 needs to be cut to appropriate length. The pipe initially exhibits a length R_{L1}. It is common that several wall bend fixtures 20 are placed close together, giving a fitter limited space for cutting the pipe part 23. To cut to the pipe part 23 to appropriate length, a cutting tool 10 in accordance with the present invention may therefore be used,

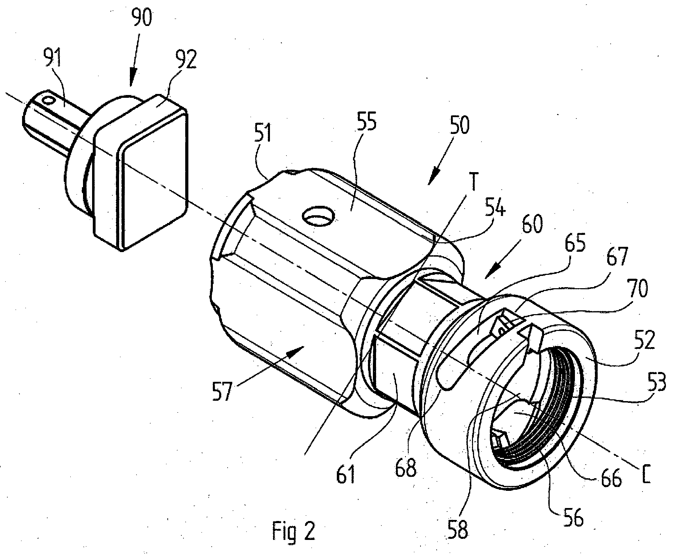

Figure 2 illustrates the cutting tool 50 with associated detachable screw part 90 in perspective view. More specifically, the cutting tool 50 exhibits a substantially cylindrical shape with a longitudinal centre line C and a transverse centre line T, a first and a second end 51, 52, an inner and an outer surface 53, 54. The cutting tool 50 exhibits a wall 57 forming the substantially cylindrical shape of the cutting tool 50. A through-going hole 58 extends through the entire cutting tool 50 between the first and second end 51, 52. The through-going hole 58 is arranged to receive a pipe arranged in the pipe 23 on the wall bend fixture 20 being cut.

In connection with the first end 51 end of the cutting tool 50 a grip 55 is arranged in order for a user to be able to easily grab and turn the cutting tool 50 during use, which will be described below in more detail. The grip 55 extends approximately half the length of the cutting tool 50 and transforms at transverse centre line T of the cutting tool 50 to a tool area 60 adapted for interaction with a wrench tool for rotation of the cutting tool 50, such as a wrench or an adjustable wrench. The tool area 60 exhibits a number of flat surfaces 61, here specifically six flat surfaces arranged in pairs opposite each other to interact with for example a wrench.

In connection with the second end 52 of the cutting tool 50, on the inner surface 53 a thread 56 is arranged for engagement and interaction with a wall bend fixture as described in connection with Figure 1. The thread pitch is around 1-6 mm/revolution, preferably 2-5 mm/revolution of the thread 56. However, the thread pitch should be adapted to be the same as that of the thread 25 of the pipe part 23. The cutting tool 50 can thus be threaded onto the thread 25 on the wall bend fixture 20 via the thread 56 of the cutting tool 50.

Between the thread 56 and the transverse centre line T of the cutting tool 50, there are two openings 65, 66 arranged opposite each other. Below only one opening will be described in more detail but it should be noted that both openings 65, 66 exhibit the disclosed characteristics. The opening 65 exhibits an oblong shape with a first and a second end 67, 68. In the first end 67 of the opening 65 a detachable cutting knife 70 is arranged. In the illustrated embodiment of the present invention, the detachable cutting knife 70 is essentially square in shape so that four cutting edges are obtained. If a cutting edge would become blunt, the cutting knife may be rotated, such that a new sharp cutting edge is arranged against the surface to be cut, in this case the pipe part 23 on wall bend fixture 20. The cutting knife 70 exhibits a substantially bowl-shaped surface such that the material cut away can be pushed out by the opposing side to the cutting edge being used. The cutting knife 70 can be attached with for example a screw or similar.

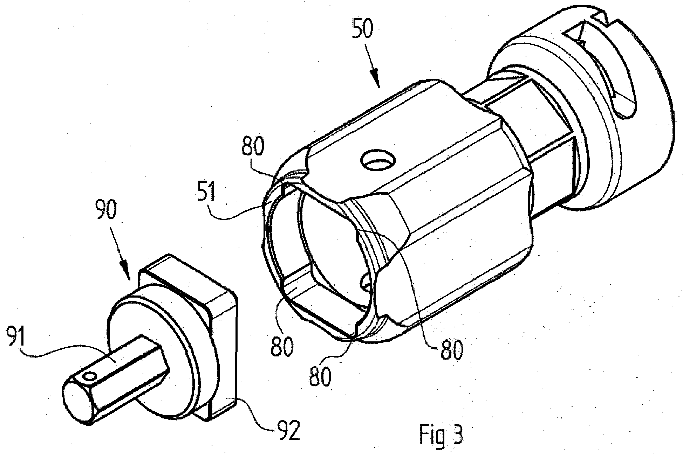

The screw part 90 exhibits a longitudinal attachment part 91 for detachable attachment to example a screw driver or a drilling machine. The attachment part 91 is arranged to a plate 92, which exhibits a substantially square shape. The substantially square shape is designed to engage with and to interact with the first end 51 of the cutting tool 50, which exhibits four indentations in the wall 57, illustrated in Figure 3, to form a corresponding square shape to the plate 92.

Figure 3 illustrates the cutting tool 50 and the screw part 90 of Figure 2 viewed in perspective from one more direction. The cutting tool 50 and screw portion 90 thus exhibit means for interaction, such that after connection and by rotating the screw part, the cutting tool 50 can be rotated. In Figures 2 and 3, this is visualized by the square shape of the plate 92 and the corresponding tracks 80 together forming a receiving and interacting part of the cutting tool 50. Other shapes are of course possible, such as hexagonal shape, or more edges.

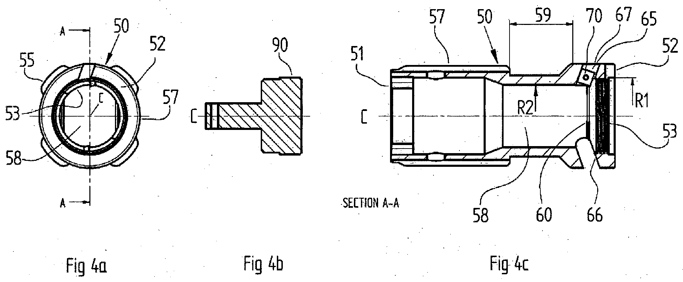

Figure 4a illustrates the cutting tool viewed from the front, i.e. looking towards the second end 52. Parts of the grip 55 can be seen. The through-going hole 58 defined by the substantially cylindrical wall 57 and its inner surface 53. Figures 4b and 4c illustrate both the cutting tool 50 and screw part 90 with a longitudinal section along the line A-A, marked in Figure 4a. In Figure 4c the wall 57 of the cutting tool 50, the first and second end 51, 52, and the thread 53 are visible. The through-going hole 58 extends between the first and second end 51, 52. Parts of the first and second through-going opening 65, 66 can be seen, and the cutting knife 70 arranged in the first end 67 of the opening 65. The through-going hole 58 exhibits a first radius R1 in the part where the thread 53 is arranged. The cutting knife 70, detachably arranged in a side of the opening 65. In the same way, a second cutting knife is arranged in a side of the other opening 66, however not illustrated. The cutting knife 70 exhibits as previously mentioned four cutting edges, whereof at least a first cutting edge 71 extends inwards towards the longitudinal centre line C of the cutting tool 50 and the through-going hole 58. The distance between the longitudinal centre line C and parts of the cutting knife 70 is therefore smaller than the above described radius R1. This results in that the cutting knife 70, alt cutting knives if several, arranged on the cutting tool 50 like in the illustrated embodiment may cut the pipe 23 on the wall bend fixture 20, as shown in Figure 1, at rotation of the cutting tool 50 around the longitudinal centre line C of the cutting tool 50.

The second end 52 of the cutting tool 50 with its thread 53 is threaded before cutting on a pipe with a corresponding thread, preferably a thread 25 on a pipe 23 on a wall bend fixture 20 as shown in Figure 1. The cutting tool 50 is rotated around the longitudinal centre line C until the cutting knife 70 engages with the circular wall of the pipe 23. When additional force is applied, the cutting knife 70 will rotate along a circular path and gradually cut the wall of the pipe 23 until desired length of the pipe 23 has been obtained. The cutting tool thus moves towards the pipe part to be cut, i.e. towards the remaining part of the pipe part. Alternatively, it can be said that the cutting tool moves towards a selected reference point on the pipe part, for example, the part closest to the wall 12, see Figure 1. The cut-away strips, alternatively parts, will conveniently be possible to remove through the through-going holes 65; 66.

During installation and cutting of a wall bend fixture, for example according to Figure 1, a water pipe 31 and possibly a protective pipe 30 surrounding the water pipe will be arranged in the pipe 23 at the wall bend fixture. It is important that these pipes are not damaged or affected by cutting the pipe 23 at the wall bend fixture. The through-going hole 58 of the cutting part 50 ensures that the pipes can be received and run freely from the cutting knife 70, whose position, i.e. distance to the longitudinal centre line C advantageously may be adapted such that the pipe part 23 is cut and can be shortened, but the cutting knife 70 does not damage the protective pipe 30 or water pipe 31 being located in the pipe 23.

Figure 4c also illustrates that the through-going hole 58 of the cutting tool 50 exhibits a number of different radii measured from the longitudinal centre line C. The thread 52 of the second end 52 of the cutting tool 50 exhibits as mentioned a first radius R1. The through-going hole 58 also exhibits a portion 59 having a second radius R2, in this case arranged between the first and second end 51, 52 of the cutting tool 50. The transition between the portion 59 and the thread 52 provides a flange 60, which can be utilized to give the cutting knives 70 a supporting surface and thereby stability of the structure. The cutting knives 70 are thus arranged directly in connection to the flange 60. Also the openings 65, 66 are arranged at the flange 60.

## Claims

1. Cutting tool (50) for cutting of a wall bend fixture comprising a threaded pipe part (23) exhibiting a thread (25), said cutting tool (50) exhibiting a substantially cylindrical shape defined by at least one wall (57), a longitudinal centre line (C), a first arid a second end (51, 52) and at least one cutting knife (70), the cutting tool further comprising attachment means for attachment to the threaded pipe part (23) arranged in connection to said second end (52), whereby said cutting knife (70) is arranged to cut the pipe part (23) at rotation of said cutting tool (50), and thereby the cutting knife (70), around said longitudinal centre line (C); wherein said cutting tool (50) exhibits a cavity (58) for receiving a pipe arranged in said threaded pipe part (23)
**characterized in**
**that** said attachment means for attachment to the threaded pipe part (23) is a thread (53) arranged to interact with said thread (25) on said pipe part (23), whereby at rotation of said cutting tool (50) in a given direction, said cutting tool (50) moves in a direction towards said pipe part (23) at the same time as the pipe part (23) is cut.

2. The cutting tool according to claim 1, **characterized in that** said thread (53) of said cutting tool (5) is arranged in direct connection to the second end (52) of said cutting tool (50).

3. The cutting tool according to any one of the claims 1 or 2, **characterized in that** said cutting tool (50) exhibits a transversal centre line (T) and by that said at least one cutting knife (70) is arranged between said transversal centre line (T) and said thread (53).

4. The cutting tool according to any one of the preceding claims, **characterized in that** said cutting tool (50) exhibits at least one through-going opening (65, 66) arranged such that cut-away material can leave said cavity (58) and thereby out of said cutting tool (50).

5. The cutting tool according to any one of the preceding claims, **characterized in that** there in connection to said first end (51) of the cutting tool (50) is arranged means for interaction with an electric tool (80) for transferring a rotary motion there-between.

6. The cutting tool according to claim 5, **characterized in that** said means for interaction with an electric tool (80) comprises a plurality of indentations (80) in said wall (57) of said cutting tool (50).

7. The cutting tool according to any one of the preceding claims, **characterized in that** said cavity (58) comprises a through-going hole (58), which extends through the entire cutting tool (50) between the first and second end (51, 52) of the cutting tool (50).

8. The cutting tool according to any one of the preceding claims, **characterized in that** said through-going hole (58) exhibits at least one portion (59) with a radius (R2) and said thread (52) exhibits a radius (R1 whereby the radius (R2) of said portion (59) is less than the radius (R1) of said thread (52).

9. The cutting tool according to claim 8, **characterized in that** that the transition between said portion (59) and said thread (53) forms a flange (60) and that at least one cutting knife (70) is arranged in connection to said flange (60).

10. The cutting tool according to claim 9, **characterized in that** said cutting tool (50) exhibits at least one through-going opening (65, 66) arranged such that cut-away material can leave said cavity (58). and thereby out of said cutting tool (50) and that said at least one through-opening (65, 66) is arranged in connection to said flange (60).

11. Kit comprising a cutting tool (50) according to any one of the preceding claims and a screw part (90) adapted to be detachably connectable to said cutting tool (50) and to interact with said cutting tool (50) for transferring a rotary motion from an electric tool.

12. Use of a cutting tool according to any one of the preceding claims within the HVS business.

13. Use of a cutting tool according to claim 12, wherein the use is within the sanitation business.

## Patentansprüche

1. Schneidwerkzeug (50) zum Schneiden einer Wandkrümmungsbefestigung, die ein Gewinderohrteil (23) umfasst, das ein Gewinde (25) aufweist, wobei das Schneidwerkzeug (50) eine im Wesentlichen zylindrische Form aufweist, die durch mindestens eine Wand (57), eine Längsmittelachse (C), ein erstes und ein zweites Ende (51, 52) und durch mindestens ein Schneidmesser (70) definiert ist, wobei das Schneidwerkzeug ferner ein Befestigungsmittel zur Befestigung an dem Gewinderohrteil (23) umfasst, das in Verbindung mit dem zweiten Ende (52) angeordnet ist, wobei das Schneidmesser (70) angeordnet ist, um bei Drehung des Schneidwerkzeugs (50) und dadurch des Schneidmessers (70) um die Längsmittelachse (C) das Rohrteil (23) zu schneiden; wobei das Schneidwerkzeug (50) einen Hohlraum (58) aufweist, um ein Rohr, das in dem Gewinderohrteil (23) angeordnet ist, aufzunehmen, **dadurch gekennzeichnet,**
**dass** das Befestigungsmittel zur Befestigung an dem Gewinderohrteil (23) ein Gewinde (53) ist, das angeordnet ist, um mit dem Gewinde (25) auf dem Rohrteil (23) in Wechselwirkung zu treten, wobei sich bei einer Drehung des Schneidwerkzeugs (50) in eine gegebene Richtung das Schneidwerkzeug (50) zur gleichen Zeit, wenn das Rohrteil (23) geschnitten wird, in eine Richtung des Rohrteils (23) bewegt.

2. Schneidwerkzeug nach Anspruch 1, **dadurch gekennzeichnet, dass** das Gewinde (53) des Schneidwerkzeugs (5) in direkter Verbindung mit dem zweiten Ende (52) des Schneidwerkzeugs (50) angeordnet ist.

3. Schneidwerkzeug nach einem der Ansprüche 1 oder 2, **dadurch gekennzeichnet, dass** das Schneidwerkzeug (50) eine Quermittelachse (T) aufweist und dass das mindestens eine Schneidmesser (70) zwischen der Quermittelachse (T) und dem Gewinde (53) angeordnet ist.

4. Schneidwerkzeug nach einem der vorhergehenden Ansprüche, **dadurch gekennzeichnet, dass** das Schneidwerkzeug (50) mindestens eine Durchgangsöffnung (65, 66) aufweist, die derart angeordnet ist, dass das abgeschnittene Material den Hohlraum (58) verlassen und dadurch aus dem Schneidwerkzeug (50) entfernt werden kann.

5. Schneidwerkzeug nach einem der vorhergehenden Ansprüche, **dadurch gekennzeichnet, dass** in Verbindung mit dem ersten Ende (51) des Schneidwerkzeugs (50) Mittel für eine Wechselwirkung mit einem elektrischen Werkzeug (80) angeordnet sind, um eine Drehbewegung dazwischen zu übertragen.

6. Schneidwerkzeug nach Anspruch 5, **dadurch gekennzeichnet, dass** die Mittel für eine Wechselwirkung mit einem elektrischen Werkzeug (80) mehrere Vertiefungen (80) in der Seitenwand (57) des Schneidwerkzeugs (50) umfasst.

7. Schneidwerkzeug nach einem der vorhergehenden Ansprüche, **dadurch gekennzeichnet, dass** der Hohlraum (58) ein Durchgangsloch (58) umfasst, das sich durch das gesamte Schneidwerkzeug (50) zwischen dem ersten und zweiten Ende (51, 52) des Schneidwerkzeugs (50) erstreckt.

8. Schneidwerkzeug nach einem der vorhergehenden Ansprüche, **dadurch gekennzeichnet, dass** das Durchgangsloch (58) mindestens einen Abschnitt (59) mit einem Radius (R2) aufweist, und dass das Gewinde (52) einen Radius (R1) aufweist, wobei der Radius (R2) des Abschnitts (59) kleiner als der Radius (R1) des Gewindes (52) ist.

9. Schneidwerkzeug nach Anspruch 8, **dadurch gekennzeichnet, dass** der Übergang zwischen dem Abschnitt (59) und dem Gewinde (53) einen Flansch (60) bildet und dass mindestens ein Schneidmesser (70) in Verbindung mit dem Flansch (60) angeordnet ist.

10. Schneidwerkzeug nach Anspruch 9, **dadurch gekennzeichnet, dass** das Schneidwerkzeug (50) mindestens eine Durchgangsöffnung (65, 66) aufweist, die derart angeordnet ist, dass das abgeschnittene Material den Hohlraum (58) verlassen und dadurch aus dem Schneidwerkzeug (50) entfernt werden kann und dass die mindestens eine Durchgangsöffnung (65, 66) in Verbindung mit dem Flansch (60) angeordnet ist.

11. Ausrüstungssatz, der ein Schneidwerkzeug (50) nach einem der vorhergehenden Ansprüche und ein Schraubteil (90) umfasst, das dafür ausgelegt ist, um mit dem Schneidwerkzeug (50) lösbar verbunden werden zu können und um mit dem Schneidwerkzeug (50) wechselwirken zu können, um eine Drehbewegung von dem elektrischen Werkzeug zu übertragen.

12. Gebrauch eines Schneidwerkzeugs nach einem der vorhergehenden Ansprüche innerhalb des HVS-Geschäftsbereiches.

13. Gebrauch eines Schneidwerkzeugs nach Anspruch 12, wobei der Gebrauch innerhalb des Geschäftsbereiches der Sanitäreinrichtungen liegt.

## Revendications

1. Outil de coupe (50) pour la coupe d'une platine murale à courbure comprenant une partie de tuyau filetée (23) présentant un filetage (25), ledit outil de coupe (50) présentant une forme sensiblement cylindrique définie par au moins une paroi (57), une ligne centrale longitudinale (C), une première et une seconde extrémité (51, 52) et au moins un couteau fraiseur (70), l'outil de coupe comprenant en outre un moyen d'attachement pour l'attachement à la partie de tuyau filetée (23) agencée en relation avec ladite seconde extrémité (52), de sorte que ledit couteau fraiseur (70) est agencé pour couper la partie de tuyau (23) lors de la rotation dudit outil de coupe (50), et de ce fait du couteau fraiseur (70), autour de ladite ligne centrale longitudinale (C) ; dans lequel ledit outil de coupe (50) présente une cavité (58) pour recevoir un tuyau agencé dans ladite partie de tuyau filetée (23)
**caractérisé en ce que**
ledit moyen d'attachement pour l'attachement à la partie de tuyau filetée (23) est un filetage (53) agencé pour interagir avec ledit filetage (25) sur ladite partie de tuyau (23), de sorte que lors de la rotation dudit outil de coupe (50) dans un sens donné, ledit outil de coupe (50) se déplace dans un sens vers ladite partie de tuyau (23) en même temps que la partie de tuyau (23) est coupée.

2. Outil de coupe selon la revendication 1, **caractérisé en ce que** ledit filetage (53) dudit outil de coupe (5) est agencé en relation directe avec la seconde extrémité (52) dudit outil de coupe (50).

3. Outil de coupe selon l'une quelconque des revendications 1 ou 2, **caractérisé en ce que** ledit outil de coupe (50) présente une ligne centrale transversale (T) et **en ce que** ledit au moins un couteau fraiseur (70) est agencé entre ladite ligne centrale transversale (T) et ledit filetage (53).

4. Outil de coupe selon l'une quelconque des revendications précédentes, **caractérisé en ce que** ledit outil de coupe (50) présente au moins une ouverture traversante (65, 66) agencée de sorte que de la matière découpée peut quitter ladite cavité (58) et de ce fait sortir dudit outil de coupe (50).

5. Outil de coupe selon l'une quelconque des revendications précédentes, **caractérisé en ce qu'**en relation avec ladite première extrémité (51) de l'outil de coupe (50) est agencé un moyen pour une interaction avec un outil électrique (80) pour transférer un mouvement rotatif entre ces derniers.

6. Outil de coupe selon la revendication 5, **caractérisé en ce que** ledit moyen pour une interaction avec un outil électrique (80) comprend une pluralité d'encoches (80) dans ladite paroi (57) dudit outil de coupe (50).

7. Outil de coupe selon l'une quelconque des revendications précédentes, **caractérisé en ce que** ladite cavité (58) comprend un trou traversant (58), qui s'étend à travers l'outil de coupe entier (50) entre les première et seconde extrémités (51, 52) de l'outil de coupe (50).

8. Outil de coupe selon l'une quelconque des revendications précédentes, **caractérisé en ce que** ledit trou traversant (58) présente au moins une partie (59) avec un rayon (R2) et ledit filetage (52) présente un rayon (R1), de sorte que le rayon (R2) de ladite partie (59) est inférieur au rayon (R1) dudit filetage (52).

9. Outil de coupe selon la revendication 8, **caractérisé en ce que** la transition entre ladite partie (59) et ledit filetage (53) forme une bride (60) et **en ce qu'**au moins un couteau fraiseur (70) est agencé en relation avec ladite bride (60).

10. Outil de coupe selon la revendication 9, **caractérisé en ce que** ledit outil de coupe (50) présente au moins une ouverture traversante (65, 66) agencée de sorte que de la matière découpée peut quitter ladite cavité (58), et de ce fait sortir dudit outil de coupe (50) et **en ce que** ladite au moins une ouverture traversante (65, 66) est agencée en relation avec ladite bride (60).

11. Kit comprenant un outil de coupe (50) selon l'une quelconque des revendications précédentes et une partie à vis (90) conçue pour pouvoir être reliée de façon amovible audit outil de coupe (50) et pour interagir avec ledit outil de coupe (50) pour transférer un mouvement rotatif en provenance d'un outil électrique.

12. Utilisation d'un outil de coupe selon l'une quelconque des revendications précédentes dans le domaine HVS.

13. Utilisation d'un outil de coupe selon la revendication 12, dans lequel l'utilisation est dans le domaine de l'assainissement.
